# FASCICULE DE BREVET EUROPEEN

(11) **EP 3 393 882 B1**
(45) Date de publication et mention de la délivrance du brevet: **10.03.2021**
(21) Numéro de dépôt: 16829422.1
(22) Date de dépôt: 23.12.2016
(51) Int. Cl.: B61D 3/18

(54) **SYSTÈME D'IMMOBILISATION D'UN PIVOT D'ATTELAGE D'UNE SEMI-REMORQUE SUR UN ENGIN DE TRANSPORT**
SYSTEM ZUR IMMOBILISIERUNG EINES SATTELAUFLIEGERACHSZAPFENS AUF EINEM TRANSPORTFAHRZEUG
SYSTEM FOR IMMOBILISING A SEMI-TRAILER KINGPIN ON A TRANSPORT VEHICLE

(30) Priorité: 24.12.2015 FR 1563292
(43) Date de publication de la demande: 31.10.2018
(73) Titulaire: Lohr Industrie, 67980 Hangenbieten (FR)
(72) Inventeur: OBER, Jacques, 67000 Strasbourg (FR); ANDRE, Jean-Luc, 67120 Molsheim (FR)
(74) Mandataire: Merckling, Norbert
(86) Numéro de dépôt international: PCT/FR2016/053661
(87) Numéro de publication internationale: WO 2017/109436

(56) Documents cités:
- EP-A1- 2 139 742
- EP-B1- 1 874 607
- US-A- 5 701 257

## Description

### Domaine technique

La présente invention se rapporte au domaine technique général du transport de semi-remorques ou remorques par l'intermédiaire de véhicules routiers du genre semi porte-engin ou semi à plateau pour leur transport sur routes, d'unités ferroviaires pour leur transport sur rails, d'aéronefs pour leur transport aérien ou de bateaux pour leur transport maritime ou fluvial.

L'invention concerne une structure support comportant un système d'immobilisation d'un pivot d'attelage d'une semi-remorque sur la structure support dans les dispositifs de transport des semi-remorques.

Selon ce système, une pièce de capotage est montée, par une ouverture centrale, sur le pivot d'attelage des semi-remorques afin d'être reçue dans un élément récepteur, dénommée nacelle, qui est montée sur la structure support..

L'invention concerne plus particulièrement une structure support prévue pour le transport des semi-remorques associée à un système de verrouillage dans lequel des moyens permettant de déplacer verticalement la nacelle en éloignement et en rapprochement de la pièce de capotage comportent un dispositif destiné à guider le déplacement vertical de la nacelle réceptrice. Un tel dispositif est prévu pour travailler en traction/compression et éventuellement comporter un dispositif de détection de choc afin d'indiquer que l'intégrité structurelle du système de verrouillage et du pivot d'attelage est susceptible d'être détériorée en cas de chocs, notamment de tamponnements de l'unité ferroviaire dans l'application ferroviaire.

L'invention concerne également le transport de remorques équipées d'un pivot d'attelage pour permettre leur immobilisation sur un structure support. Pour des raisons de simplification et par définition, il ne sera fait référence dans la suite qu'à des semi-remorques, mais le terme « semi-remorque » doit donc être compris de façon large dans la présente, pour englober également des remorques équipées d'in pivot d'attelage.

### Etat de la technique

Le pivot d'attelage des semi-remorques normalisées est prévu pour venir s'engager de façon dissociable sur une sellette portée par un véhicule tracteur afin de former une articulation de pivotement permettant le déplacement des semi-remorques par le véhicule tracteur qui leur est associé.

Par le brevet EP 1874607 au nom du déposant, on connait un système de verrouillage du pivot d'attelage d'une semi-remorque sur une unité ferroviaire dans lequel une pièce de capotage est montée, par une ouverture centrale, sur le pivot d'attelage des semi-remorques afin d'être reçue dans un élément récepteur, dénommée nacelle, qui est montée sur l'unité ferroviaire. Cette nacelle a notamment pour but de centrer automatiquement et de verrouiller la pièce de capotage, et donc le pivot d'attelage, lors de la réception de la pièce de capotage dans la nacelle. Cette nacelle est habituellement déplacée par un moyen d'élévation permettant de la mouvoir verticalement afin de recevoir la pièce de capotage et le pivot d'attelage en vue de son maintien et de son verrouillage. Ce moyen d'élévation comprend habituellement un ensemble vérin à vis prévu pour supporter la charge verticale de la semi-remorque.

Selon ce système antérieur de verrouillage du pivot d'attelage, la nacelle est montée articulée à un ensemble de support constitué d'une table de liaison reposant à plat sur la structure ferroviaire afin de procurer à la nacelle une stabilité autour de l'axe de roulis. Cette table de liaison est montée articulée en pivotement à son extrémité arrière sur la structure ferroviaire de manière à être libre en mouvements de débattement longitudinaux et de pivotement vers le haut. Cette structure articulée de liaison de la nacelle avec la structure ferroviaire confère à la table de liaison un débattement suffisant en mouvements longitudinaux et verticaux par rapport à la structure ferroviaire pour permettre à la nacelle de s'abaisser et de se relever.

En cas de tamponnement de l'unité ferroviaire portant la semi-remorque, ou lors d'autres événements, l'unité ferroviaire subit un choc brutal. La nacelle étant reliée à un ensemble de support qui est libre en mouvements de débattement longitudinaux, le choc est transmis au système de verrouillage et au pivot d'attelage.

Actuellement, le système de verrouillage, bien que très résistant, ne répond pas aux normes ferroviaires, et est susceptible d'être détérioré par un tel choc, lequel peut correspondre à un effort de plusieurs dizaines de tonnes. En effet, le moyen d'élévation de la nacelle comprend généralement un vérin vertical qui est conçu pour résister aux charges et aux chocs verticaux, mais qui est vulnérable vis-à-vis des efforts en flexion et des chocs horizontaux.

En effet, selon le système antérieur de verrouillage du pivot d'attelage, le moyen d'élévation est monté fixe sur l'unité ferroviaire et il subit donc une grande partie du choc longitudinal en cas de tamponnage.

De même, au niveau de la pièce de capotage, un choc risque de détériorer le pivot d'attelage, car celui-ci répond aux normes routières, qui sont moins exigeantes que les normes ferroviaires sur ce point.

La détérioration éventuelle d'un système de verrouillage ou d'un pivot d'attelage n'est pas facilement décelable après un choc. Ainsi, après un choc violent lors d'un tamponnage, ces éléments peuvent être fragilisés sans que cela ne soit détecté. Ainsi, les opérateurs assurant le chargement et le déchargement des remorques sur l'unité ferroviaire peuvent donc continuer à effectuer leur travail tout en ignorant cette fragilité, ce qui peut avoir de graves conséquences.

En effet, si le système de verrouillage présente une défaillance lors du transport ferroviaire d'une semi-remorque, cette semi-remorque est susceptible de ne plus être immobilisée sur l'unité ferroviaire et d'en tomber.

Dans le cas d'un pivot d'attelage fragilisé, lorsque le chauffeur, après avoir déchargé la semi-remorque de l'unité ferroviaire, emmène celle-ci à sa destination finale en la tractant avec son véhicule tracteur, le pivot d'attelage est susceptible de se rompre lors de ce trajet et la semi-remorque peut alors se renverser sur la route et provoquer un drame.

Il existe donc un besoin pour un dispositif destiné à s'assurer de l'intégrité structurelle du système de verrouillage, qui doit autoriser une certaine tolérance dans les contraintes subies lors de son fonctionnement en situation normale. Grâce à un tel dispositif, le système de verrouillage peut avantageusement répondre aux normes ferroviaires.

Bien qu'optionnel, en cas de tamponnage de l'unité ferroviaire ou d'autres chocs susceptibles de détériorer le système de verrouillage ou le pivot d'attelage, il existe également un besoin pour un dispositif de détection de choc qui permette de détecter si l'unité ferroviaire portant la semi-remorque a subi un choc susceptible de détériorer le pivot d'attelage.

Ces différents dispositifs doivent avantageusement pouvoir être calibrés pour se déclencher au-delà d'un seuil de choc prédéterminé. Suivant les requis de l'exploitation, ce seuil peut être modifié pour permettre de détecter des chocs plus faibles, notamment dans un souci de protection des marchandises transportées, ou plus importants, par exemple dans le cas de normes ferroviaires différentes.

### Description de l'invention

L'objet de la présente invention vise par conséquent à répondre aux inconvénients évoqués plus haut en proposant un nouveau système d'immobilisation d'une semi-remorque sur une structure support pour son transport.

Un autre objet de l'invention vise à proposer un nouveau système de verrouillage du pivot d'attelage d'une semi-remorque par exemple sur une unité ferroviaire, conçu pour autoriser une certaine tolérance dans les contraintes subies lors de son fonctionnement en situation normale.

Un autre objet de l'invention vise à fournir un dispositif de détection de choc pour système d'immobilisation du pivot d'attelage d'une semi-remorque sur une structure support et notamment sur une unité ferroviaire.

Les objets assignés à l'invention sont atteints à l'aide d'une structure support comportant un système d'immobilisation pour immobiliser une semi-remorque pour son transport sur ou dans la structure support, ledit système d'immobilisation comprenant un système de verrouillage d'un pivot d'attelage de la semi-remorque sur ladite structure support, lequel système de verrouillage comprend :
- une nacelle réceptrice montée mobile verticalement sur la structure support et prévue pour recevoir une pièce de capotage montée par une ouverture centrale sur le pivot d'attelage d'une semi-remorque,
- un système d'élévation comprenant un dispositif de levage disposé sensiblement verticalement sous la nacelle réceptrice et fixé à celle-ci pour la déplacer verticalement entre une position basse et au moins une position haute
- une structure rigide de liaison (33) sensiblement horizontale s'étendant longitudinalement et reprenant les efforts longitudinaux subits par la nacelle réceptrice (5), cette structure rigide de liaison (33) étant reliée de manière articulée à la nacelle réceptrice (5) par sa première extrémité et de manière articulée à la structure support (4) par sa seconde extrémité, caractérisée en ce que :
   - le système d'élévation est monté pivotant sur la structure support au niveau d'un axe de pivotement transversal,
   - le dispositif de levage est fixé à la nacelle réceptrice par l'intermédiaire d'une articulation autorisant au moins un mouvement de bascule longitudinale de la nacelle réceptrice,
   et en ce que le système de verrouillage comprend en outre les moyens suivants :
   - des butées mécaniques qui limitent le mouvement de bascule longitudinale de la nacelle réceptrice vers l'avant et vers l'arrière ;
   - un dispositif de rappel élastique qui ramène la nacelle réceptrice en position non basculée.

Les efforts longitudinaux subits par la nacelle réceptrice sont transmis ainsi à la structure rigide de liaison. Le dispositif de rappel élastique permet à la nacelle de basculer temporairement pour s'adapter à l'inclinaison de la semi-remorque tout en la forçant en position non-basculée, tandis que le mouvement de basculement de la nacelle réceptrice est limité en amplitude par les butées, ce qui évite un basculement trop important de la nacelle réceptrice. Ces différents moyens permettent donc avantageusement au système de verrouillage du pivot d'attelage de l'invention de répondre à diverses exigences et notamment aux normes de solidité ferroviaire.

Selon un exemple de mise en œuvre de l'invention, l'articulation comprend une rotule qui autorise une libre orientation de la nacelle réceptrice. Cette rotule assure la retenue verticale de la nacelle réceptrice tout en permettant sa libre orientation. Elle permet au système de verrouillage du pivot d'attelage de l'invention de se conformer au tablier de la semi-remorque dans le cas où celui-ci ne serait pas parfaitement horizontal.

Selon un autre exemple de mise en œuvre de l'invention, le dispositif de rappel élastique comprend au moins un ressort précontraint qui maintient la nacelle réceptrice en position non basculée tant que l'effort subit par le ressort précontraint n'excède pas son seuil de précontrainte, et qui autorise le basculement de la nacelle réceptrice lorsque le seuil de précontrainte est dépassé. Lorsque le couple subit par le bras d'équilibrage excède le seuil de précontrainte de l'au moins un ressort précontraint, ce dernier est prévu pour autoriser temporairement une libre orientation de la nacelle réceptrice, tout en la forçant en rappel pour la ramener en position non-basculée, de sorte que le système de verrouillage ne reste pas en butée une fois que le pivot d'attelage a été verrouillé par sa pièce de capotage dans la nacelle réceptrice. Ainsi, le bras d'équilibrage est débrayable pour permettre à la nacelle réceptrice de s'écarter temporairement de son plan horizontal afin d'assurer un parfait verrouillage de celle-ci avec une pièce de capotage légèrement décentrée.

Selon un exemple supplémentaire de mise en œuvre de l'invention, le dispositif de levage est un vérin à vis, un vérin pneumatique, un vérin hydraulique ou un vérin électrique. Ces dispositifs de levage sont en effet préférés car ils sont très résistants aux efforts verticaux.

Selon un exemple de mise en œuvre de l'invention, la structure rigide de liaison comprend des bras rigides longitudinaux reliés entre eux par des traverses, ce qui lui procure une importante robustesse.

Selon un autre exemple de mise en œuvre de l'invention, le système de verrouillage comprend :
- un montant vertical solidaire de la nacelle réceptrice et prolongeant celle-ci vers le bas ;
- un bras d'équilibrage relié de manière articulée au montant vertical par un pivot d'assemblage et relié au système d'élévation de manière coulissante verticalement par rapport audit système d'élévation ;
   et dans lequel les butées mécaniques étant situées sur le bras d'équilibrage, et le mouvement de bascule longitudinale de la nacelle réceptrice vers l'avant et vers l'arrière étant limité par le contact du montant vertical contre ces butées mécaniques ; et dans lequel, le dispositif de rappel élastique étant relié au bras d'équilibrage et au montant vertical.

Selon un exemple supplémentaire de mise en œuvre de l'invention, le pivot d'assemblage est situé dans la zone médiane du bras d'équilibrage, en ce qu'une première extrémité du bras d'équilibrage est reliée au système d'élévation, et en ce que la seconde extrémité du bras d'équilibrage est reliée au dispositif de rappel élastique par un pivot d'articulation.

Selon un exemple de mise en œuvre de l'invention, le dispositif de rappel élastique est monté sur le montant vertical par une articulation.

Selon un autre exemple de mise en œuvre de l'invention, le dispositif de rappel élastique comprend deux logements renfermant chacun un ressort précontraint, une première extrémité de chaque logement étant montée articulée sur une tige qui traverse le montant vertical, et la deuxième extrémité de chaque logement étant montée articulée sur le pivot d'articulation qui traverse la seconde extrémité du bras d'équilibrage.

Selon un exemple supplémentaire de mise en œuvre de l'invention, le montant vertical se termine en partie inférieure par deux joues parallèles entre lesquelles le bras d'équilibrage est reçu, et en ce que le pivot d'assemblage est une tige qui traverse le bras d'équilibrage et ces deux joues.

Selon un exemple de mise en œuvre de l'invention, le système d'élévation présente deux glissières verticales dans lesquelles coulisse de façon guidée une tige transversale solidaire du bras d'équilibrage, la tige transversale étant retenue dans chaque glissière au niveau de ses extrémités par des butées transversales. Selon cet exemple, la longueur des glissières verticales peut limiter l'amplitude de la course verticale du bras d'équilibrage.

Selon un autre exemple de mise en œuvre de l'invention, l'unité ferroviaire comprend un dispositif de détection de choc prévu pour détecter si la structure support portant une semi-remorque subit un choc susceptible de détériorer le pivot d'attelage. Ce dispositif fournit une sécurité supplémentaire au système de verrouillage de l'invention, notamment dans le cas où l'on souhaite savoir si ce dernier a subit des chocs importants.

Selon un exemple supplémentaire de mise en œuvre de l'invention, la structure rigide de liaison est reliée à la structure support par une articulation, et en ce que le dispositif de détection de choc comprend au moins une goupille de cisaillement prévue dans cette articulation et qui se rompt lorsque la structure rigide de liaison subit un effort longitudinal qui excède un seuil donné, cette rupture de la goupille de cisaillement autorisant un déplacement longitudinal anormal de la structure rigide de liaison. Le seuil de rupture des goupilles de cisaillement permet ainsi de choisir pour quel seuil de choc on souhaite que le dispositif de détection de choc soit actionné.

Selon un autre exemple de mise en œuvre de l'invention, la structure support est équipée d'une conduite de dérivation reliée à une conduite générale pneumatique qui alimente et commande les freins de la structure support, et en ce que le dispositif de détection de choc comprend en outre un outil de sectionnement qui, en cas de déplacement longitudinal anormal de la structure rigide de liaison, sectionne totalement ou partiellement ladite conduite de dérivation.

Selon un exemple de réalisation, le système d'élévation comprend un actionneur commandé pour déplacer et positionner la nacelle à une hauteur compatible avec la hauteur de la semi-remorque. Il est ainsi possible d'obtenir une multitude de positions et de s'adapter aux différentes hauteurs des semi-remorques.

Fonctionnant sans énergie, le dispositif de détection de choc de l'invention est par conséquent satisfaisant du point de vue de la sécurité. Grâce au sectionnement d'une partie de la conduite de dérivation et à la fuite de fluide qui en résulte, les utilisateurs sont avantageusement alertés du fait qu'un choc important a été subit par un pivot d'attelage, de sorte que ce dernier puisse être inspecté afin de savoir notamment si la semi-remorque est utilisable en l'état ou non.

Ainsi, notamment dans le cas préféré ou l'alerte des utilisateurs concernant le choc subi s'effectue par un blocage des freins de la structure support, le dispositif de détection de choc de l'invention est réversible et permet le déblocage des freins. Une fois actionné par un choc important, le dispositif de détection de choc n'empêche ni le fonctionnement du système de verrouillage du pivot d'attelage d'une semi-remorque sur la structure support, ni le déchargement de la semi-remorque concernée hors de la structure support.

L'ensemble comprenant le système d'immobilisation et la structure support présente donc des avantages indéniables.

Avantageusement, la structure support est une unité ferroviaire.

Selon une autre application de l'invention, la structure support est un plateau de chargement d'un véhicule routier.

Selon encore une autre application de l'invention, la structure support est un plateau de chargement d'un aéronef.

Selon encore une autre application de l'invention, la structure support est un plateau de chargement d'un bateau.

Avantageusement, selon un exemple de réalisation, la structure support est séparable de son engin de transport et ce par l'intermédiaire d'un système de manutention. La structure support peut donc être rapportée de façon amovible sur un engin de transport. Alternativement, la structure de transport peut être intégrée à un engin de transport ou constituer ledit engin de transport.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue de profil d'une semi-remorque monté sur une unité ferroviaire équipée d'un système de verrouillage selon l'invention dans laquelle la nacelle est en position basse ;
- la figure 2 est une vue équivalente à celle de la figure 1, mais dans laquelle la nacelle est en position haute d'engagement avec le pivot d'attelage de la semi-remorque ;
- la figure 3 est une vue de détail de la partie encerclée sur la figure 1 ;
- la figure 4 est une vue de détail de la partie encerclée sur la figure 2 ;
- les figures 5 à 7 sont des figures schématiques simplifiée illustrant l'invention et un exemple de fonctionnement cinématique de celle-ci ;

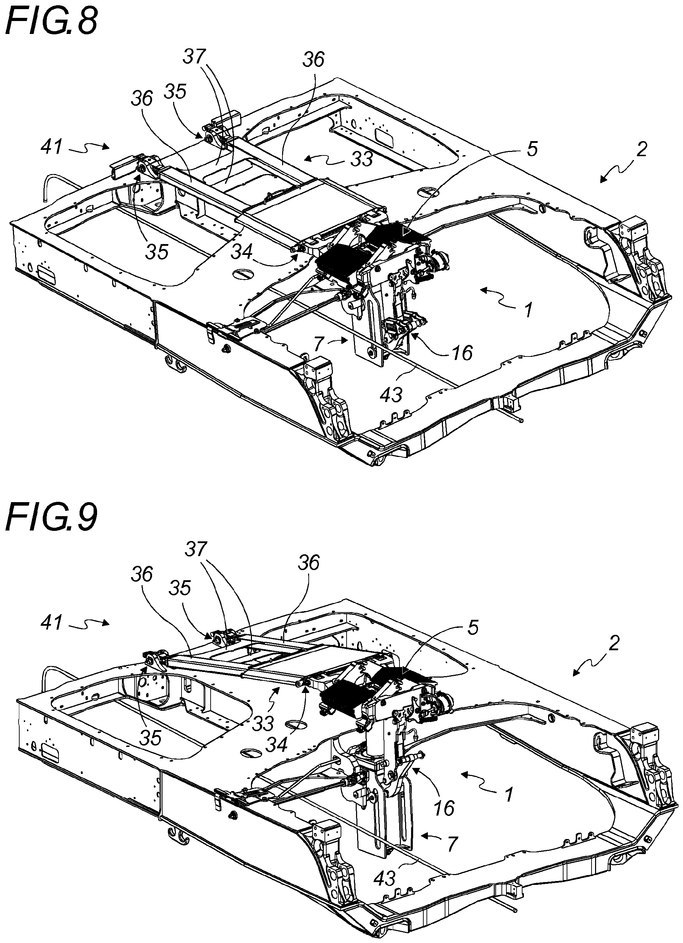

- la figure 8 est une vue en perspective de dessus d'une partie d'une unité ferroviaire comportant un système de verrouillage selon l'invention dans laquelle la nacelle est en position basse ;
- la figure 9 est une vue équivalente à celle de la figure 8, mais dans laquelle la nacelle est en position haute ;

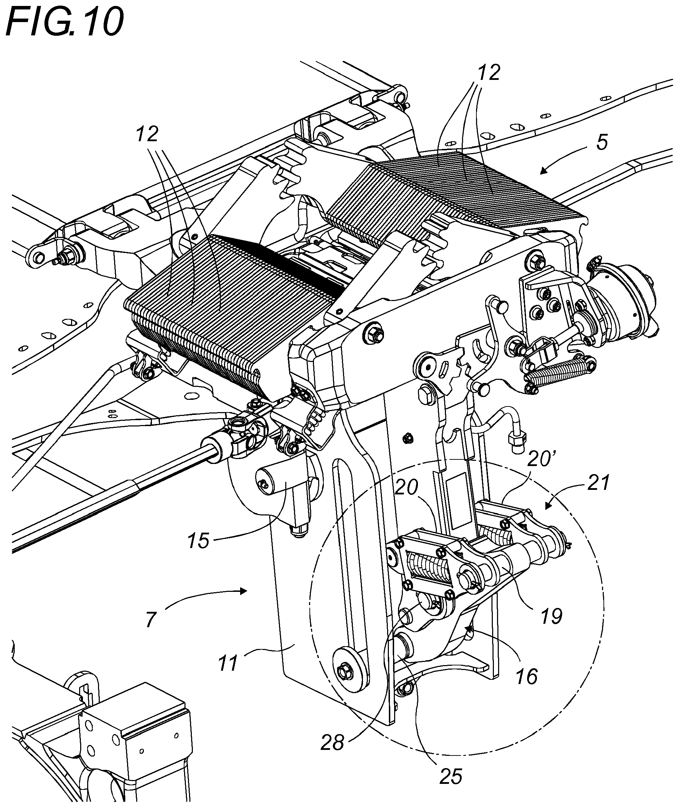

- la figure 10 est une vue de détail en perspective de dessus de la nacelle réceptrice et du dispositif prévu pour la déplacer verticalement, dans laquelle une pièce de capotage est reçue dans la nacelle réceptrice ;

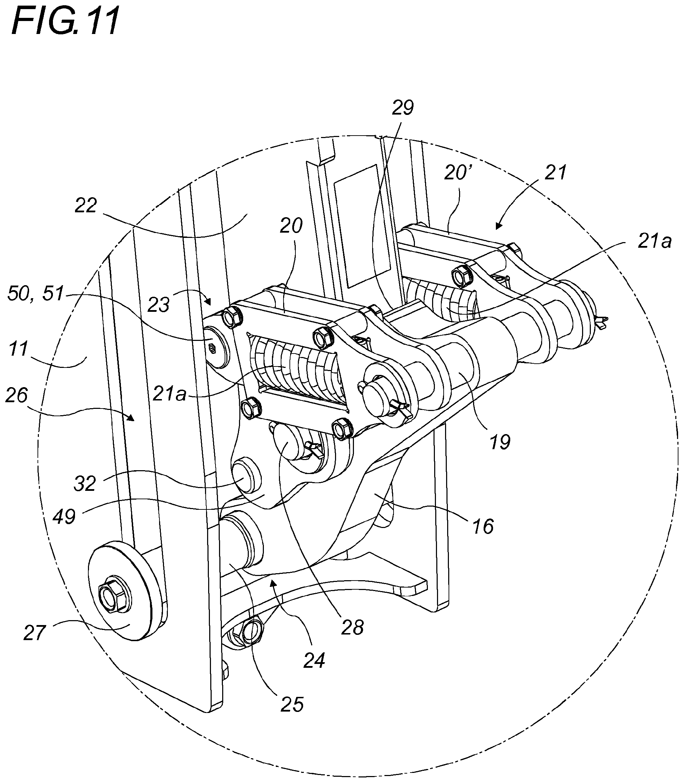

- la figure 11 est une vue de détail de la partie encerclée sur la figure 10 ;
- la figure 12 est une vue de profil d'une partie d'une unité ferroviaire comportant un système de verrouillage selon l'invention dans laquelle la nacelle est en position basse ;
- la figure 13 est une vue en coupe verticale correspondant à la figure 12 ;
- la figure 14 est une vue de profil d'une partie d'une unité ferroviaire comportant un système de verrouillage selon l'invention dans laquelle la nacelle est en position haute ;
- la figure 15 est une vue en coupe verticale correspondant à la figure 14 ;
- la figure 16 est une vue de profil du système de verrouillage selon l'invention au niveau d'un bras d'équilibrage, dans laquelle celui-ci est en position normale ;
- la figure 17 est une vue équivalente à celle de la figure 16, mais dans laquelle la nacelle basculée vers la droite avec le bras d'équilibrage en butée haute ;
- la figure 18 est une vue équivalente à celle de la figure 16, mais dans laquelle la nacelle basculée vers la gauche avec le bras d'équilibrage en butée basse ;
- la figure 19 est une vue en perspective d'une partie d'une unité ferroviaire comportant un système de verrouillage de pivot d'attelage ainsi qu'un dispositif de détection de choc selon l'invention ; et
- la figure 20 est une vue en coupe verticale selon l'axe de coupe X-X représenté sur la figure 19.

### Mode(s) de réalisation de l'invention

Les éléments structurellement et fonctionnellement identiques présents sur plusieurs figures distinctes, sont affectés d'une même référence numérique ou alphanumérique.

Par direction longitudinale, on entend dans ce texte la direction de déplacement d'une structure support et qui correspond à l'axe principal de ladite structure support, et par direction transversale, on entend une direction horizontale perpendiculaire à la direction longitudinale.

Dans la suite, pour des raisons de simplification de la présentation de l'invention, il sera fait référence plus particulièrement à une structure support constituant une unité ferroviaire ou un sous-ensemble d'une telle unité ferroviaire, mais l'invention n'est aucunement limitée par une telle application.

Puisqu'une unité ferroviaire est prévue pour pouvoir circuler dans un sens ou dans l'autre, elle ne comprend pas à proprement parlé une partie avant et une partie arrière. Néanmoins, pour se référer à une direction selon l'axe longitudinal de l'unité ferroviaire on se référera au côté situé vers l'extrémité proche de l'unité ferroviaire (le côté gauche sur les figures) et au côté situé vers le centre de l'unité ferroviaire (le côté droit sur les figures), car le système de verrouillage de l'invention est situé au niveau d'une des extrémités d'une unité ferroviaire.

Le système de verrouillage (1) du pivot d'attelage (2) d'une semi-remorque (3) sur une unité ferroviaire (4) développé par le déposant comprend une nacelle réceptrice (5) montée mobile verticalement sur une structure support (4) ou unité ferroviaire (4) et prévue pour recevoir une pièce de capotage (6) montée par une ouverture centrale sur le pivot d'attelage (2) d'une semi-remorque (3). Le déplacement vertical de la nacelle réceptrice (5) est assuré par un système d'élévation (7) comprenant un dispositif de levage (8) de la nacelle réceptrice (5).

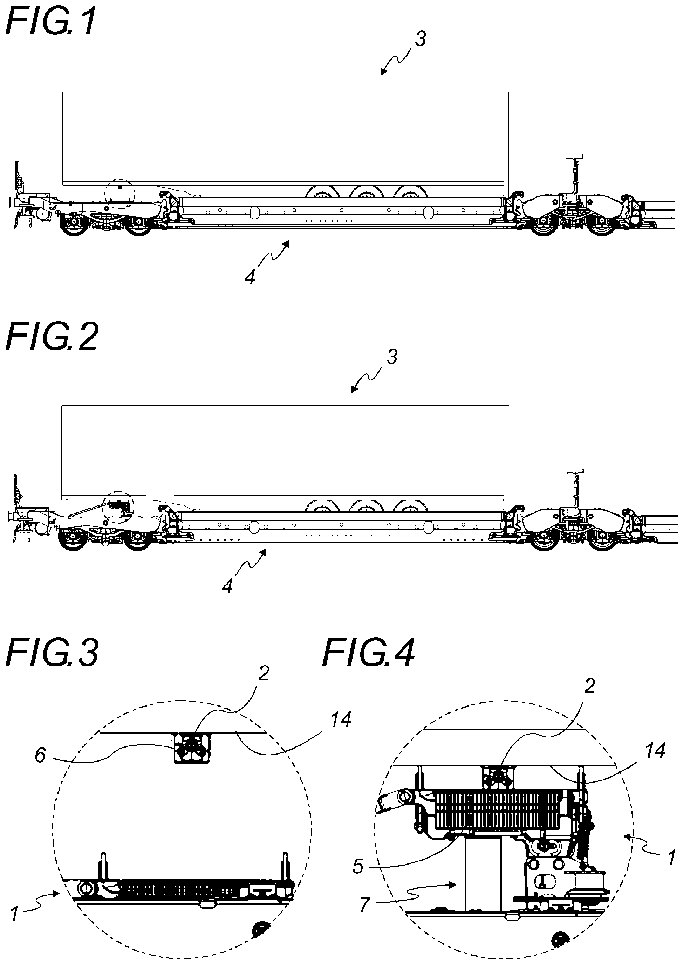

L'unité ferroviaire (4) est préférentiellement un wagon de transport combiné rail-route pour semi-remorques (3) (voir figures 1 et 2).

Le système d'élévation (7) de la nacelle représenté à titre d'exemple sur les figures comprend par exemple un vérin à vis (9), constitué d'une vis de levage (10) montée coulissante dans un fourreau (11), et disposé verticalement sous la nacelle réceptrice (5). A la place d'un vérin à vis (9), ce système d'élévation (7) peut également comprendre un vérin pneumatique, hydraulique ou électrique, ou tout autre moyen adapté permettant le déplacement vertical de la nacelle réceptrice (5) tout en supportant les efforts verticaux subits lors du verrouillage du pivot d'attelage (2) d'une semi-remorque (3) sur une unité ferroviaire (4) et lors du transport de cette semi-remorque (3) par ladite unité ferroviaire (4).

Lorsqu'une semi-remorque (3) est placée sur l'unité ferroviaire (4), son pivot d'attelage (2), équipé d'une pièce de capotage (6), est positionné au-dessus de la nacelle réceptrice (5). La nacelle réceptrice (5) est alors déplacée vers le haut par le système d'élévation (7) pour recevoir la pièce de capotage (6) qui équipe le pivot d'attelage (2). Cette pièce de capotage (6) est alors centrée, immobilisée latéralement et longitudinalement, et verrouillée verticalement par la nacelle réceptrice (5).

A titre d'exemple, la nacelle réceptrice (5) représentée sur les figures comprend deux rangées d'éléments basculants (12), comportant chacun une masselotte et dont la forme est étudiée pour assurer un rappel gravitaire en verrouillage de la pièce de capotage (6). Lors du transport d'une semi-remorque (3) sur une unité ferroviaire (4) équipée d'un système de verrouillage (1) du pivot d'attelage (2) selon l'invention, la semi-remorque (3) repose sur les éléments basculants (12) de la nacelle réceptrice (5) et sur la pièce de capotage (6), qui est elle-même en appui sur ces éléments basculants (12).

Lors du déchargement d'une semi-remorque (3) ainsi transportée sur une unité ferroviaire (4), la pièce de capotage (6) est désengagée de la nacelle réceptrice (5). La nacelle réceptrice (5) est alors redescendue par le système d'élévation (7) et la pièce de capotage (6) peut être retirée après son déverrouillage du pivot d'attelage (2). Un véhicule tracteur peut alors venir chercher la semi-remorque (3) en venant engager le pivot d'attelage (2) de celle-ci avec une sellette prévue à cet effet, puis en tractant la semi-remorque (3) par son pivot d'attelage (2).

Selon un autre exemple de réalisation, lors du déchargement d'une semi-remorque (3) ainsi transportée sur une unité ferroviaire (4), le pivot d'attelage (2) est désengagé de la pièce de capotage (6) soit par un mouvement de montée de la semi-remorque (3) soit par la descente de la nacelle réceptrice (5). Un véhicule tracteur peut alors venir chercher la semi-remorque (3) en venant engager le pivot d'attelage (2) de celle-ci avec une sellette prévue à cet effet, puis en tractant la semi-remorque (3) par son pivot d'attelage (2). La pièce de capotage (6) peut être retirée de la nacelle réceptrice (5).

Dans sa partie inférieure, la nacelle réceptrice (5) est reliée au système d'élévation (7) par une articulation (13), par exemple une rotule (13'), qui assure la tenue verticale de la nacelle réceptrice (5) tout en permettant sa libre orientation. En effet, lorsque la nacelle réceptrice (5) est déplacée vers le haut pour venir se plaquer sous la plaque de pivot (14) d'une semi-remorque (3) afin d'engager la pièce de capotage (6) montée sur le pivot d'attelage (2) de la semi-remorque (3), il arrive parfois que ladite plaque de pivot (14) ne soit pas parallèle à l'unité ferroviaire (4).

Le montage sur articulation (13) de la nacelle réceptrice (5) permet donc à la nacelle réceptrice (5) de se plaquer de manière parallèle contre la plaque de pivot, sensiblement horizontale, quelle que soit l'orientation de cette dernière.

L'articulation (13) est de préférence prévue sensiblement au milieu de la face du dessous de la nacelle réceptrice (5).

Le système d'élévation (7) est lui-même monté pivotant sur l'unité ferroviaire (4) au niveau d'un axe de pivotement (15) transversal par rapport à l'axe longitudinal de l'unité ferroviaire (4). Ce montage pivotant du système d'élévation (7) lui permet de ne pas subir de choc longitudinal en cas de tamponnement, l'effort longitudinal subit étant alors converti en mouvement de pivotement du système d'élévation (7) autour de son axe de pivotement (15).

Lorsqu'une semi-remorque (3) repose sur les éléments basculants (12) de la nacelle réceptrice (5) et sur la pièce de capotage (6), la charge verticale de la semi-remorque (3) est reprise par la nacelle réceptrice (5) et retransmise à l'unité ferroviaire (4) par l'intermédiaire du système d'élévation (7). Le système d'élévation (7) ne subit donc que les efforts verticaux, qui correspondent à la charge verticale de la semi-remorque (3).

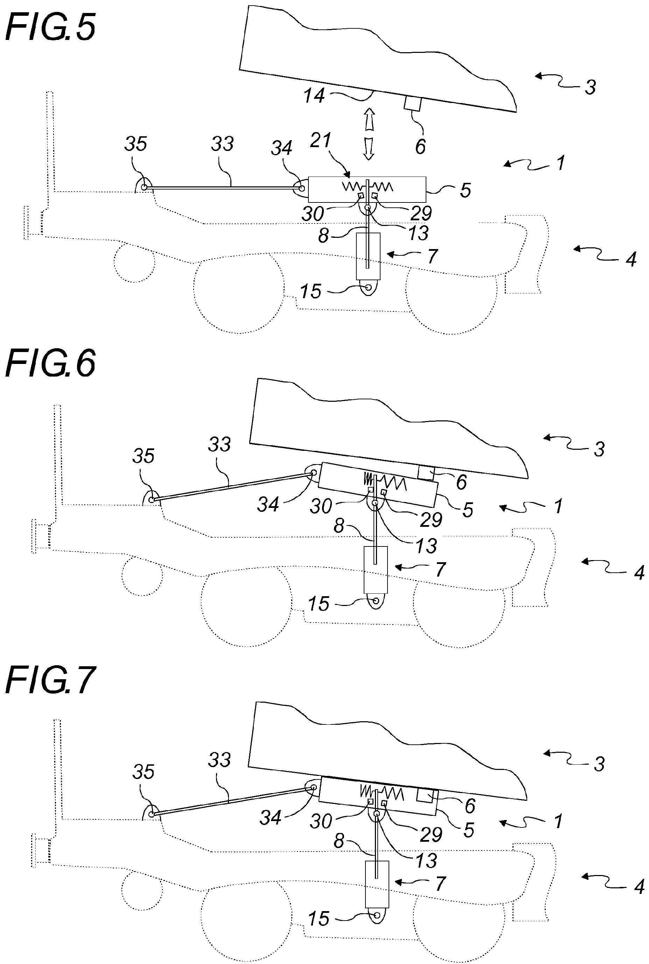

Les moyens essentiels du système de verrouillage (1) de l'invention sont représentés de manière schématique et simplifiée sur les figures 5, 6 et 7. Ces figures illustrent les étapes de réception d'immobilisation d'une semi-remorque (3) inclinée par le système de verrouillage (1) de l'invention équipant une unité ferroviaire (4). Le pivot d'attelage (2) de la semi-remorque (3) est logé dans une pièce de capotage (6) pour être reçu dans la nacelle réceptrice (5).

Sur ces figures le système d'élévation (7) remplit également les fonctions d'équilibrage pour la nacelle réceptrice (5).

Le butées mécaniques (29, 30) qui limitent le mouvement de bascule longitudinale de la nacelle réceptrice (5) vers l'avant et vers l'arrière sont également représentées, tout comme le dispositif de rappel élastique (21) qui ramène la nacelle réceptrice (5) en position non basculée.

Sur ces figures, est également représentée une structure rigide de liaison (33) sensiblement horizontale s'étendant longitudinalement et reprenant les efforts longitudinaux subits par la nacelle réceptrice (5), cette structure rigide de liaison (33) étant reliée de manière articulée à la nacelle réceptrice (5) par sa première extrémité et de manière articulée à l'unité ferroviaire (4) par sa seconde extrémité.

Sur la figure 5, la nacelle réceptrice (5) est en cours d'élévation verticale en direction de la semi-remorque (3). Elle est maintenue dans un plan horizontal grâce au dispositif de rappel élastique (21).

Sur la figure 6, la nacelle réceptrice (5) entre en contact avec la pièce de capotage (6) est le dispositif de rappel élastique (21) est sollicité de sorte d'autoriser le basculement de la nacelle réceptrice (5), ce basculement étant limité par les butées (29, 30).

Sur la figure 7, la pièce de capotage (6) est reçue dans la nacelle réceptrice (5), qui est partiellement ramenée en position horizontale par le dispositif de rappel élastique (21), de sorte que le système de verrouillage (1) ne soit plus en butée.

Dans la suite de ce descriptif, nous allons nous intéresser à un mode de réalisation préférentiel de l'invention.

Le système de verrouillage (1) de l'invention comprend également un bras d'équilibrage (16) prévu pour guider le déplacement vertical de la nacelle réceptrice (5), la maintenir en position au-dessus du système d'élévation (7) dans un plan horizontal et reprendre les efforts subits par celle-ci.

Ce bras d'équilibrage (16) maintient la nacelle réceptrice (5) dans un plan horizontal pendant les déplacements verticaux de celle-ci, tant qu'elle n'est pas en contact avec une pièce de capotage (6).

Lorsque la nacelle réceptrice (5) est en contact avec une pièce de capotage (6), le bras d'équilibrage (16) est cependant prévu pour autoriser une libre orientation de la nacelle réceptrice (5), ou au moins un basculement longitudinal de celle-ci, de sorte qu'elle puisse être bien plaquée contre la plaque de pivot (14) ou le tablier de la semi-remorque (3), qui sont susceptibles de ne pas être parfaitement horizontaux. Pour des raisons fonctionnelles et de sécurité, la libre orientation de la nacelle réceptrice (5) est néanmoins limitée en amplitude par des butées mécaniques (29, 30).

Le bras d'équilibrage (16) permet ainsi une certaine mobilité de la nacelle réceptrice (5) lors de la réception d'une pièce de capotage (6).

Le système de verrouillage (1) de l'invention comprend également une structure rigide de liaison (33).

Le bras d'équilibrage (16) et la structure rigide de liaison (33) sont notamment prévus pour guider le déplacement vertical de la nacelle réceptrice (5).

Le bras d'équilibrage (16) comprend un dispositif de rappel élastique (21) monté de manière articulé sur le bras d'équilibrage (16) au niveau d'un pivot d'articulation (19).

De manière générale, le bras d'équilibrage (16) se prolonge de manière longitudinale et excentrée par rapport à la nacelle, avec son pivot d'articulation (19) dirigé du côté orienté vers le centre de l'unité ferroviaire (4).

Le dispositif de rappel élastique (21) est également relié de manière articulée à la nacelle réceptrice (5) par une articulation (50), de préférence au niveau d'un montant vertical (22) prolongeant la nacelle réceptrice (5) vers le bas.

Le dispositif de rappel élastique (21) se présente préférentiellement sous la forme d'une fourche avec deux logements (20, 20') comportant chacun un ressort précontraint (21a). Ces deux logements (20, 20') sont prévus de part et d'autre du montant vertical (22), avec l'extrémité libre (23) de chaque logement (20, 20') étant monté articulée sur ledit montant vertical (22) par une articulation (50), par exemple au moyen d'une tige (51) qui traverse ce montant vertical (22).

Le bras d'équilibrage (16) se présente préférentiellement sous la forme d'une pièce rigide en S. Son extrémité libre (24) est montée coulissante sur le système d'élévation (7), par exemple sur le fourreau (11) du vérin à vis (9). Cette extrémité libre (24) du bras d'équilibrage (16) comporte par exemple une tige transversale (25) qui coulisse verticalement de façon guidée dans deux glissières (26) prévues verticales sur le système d'élévation (7), la tige transversale (25) étant retenue dans chaque glissière (26) au niveau de ses extrémités par des butées transversales (27).

Au niveau de sa partie sensiblement médiane, le bras d'équilibrage (16) est également monté de manière articulée sur le montant vertical (22) de la nacelle réceptrice (5), par un pivot d'assemblage (28). Pour ce montage, la partie inférieure du montant vertical (22) est par exemple sous la forme de deux joues (49, 49') parallèles entre lesquelles le bras d'équilibrage (16) est reçu à pivotement, le pivot d'assemblage (28) étant alors par exemple sous la forme d'une tige qui traverse le bras d'équilibrage (16) et ces deux joues (49, 49').

Lorsque le système d'élévation (7) déplace verticalement la nacelle réceptrice (5), le bras d'équilibrage (16) fixé à cette dernière est également déplacé verticalement, avec la tige transversale (25) qui coulisse dans chaque glissière (26), ce qui permet de guider la nacelle réceptrice (5) lors de son déplacement de sorte qu'elle reste dans un plan horizontal.

La longueur des glissières (26) verticales permet de limiter la course verticale du bras d'équilibrage (16).

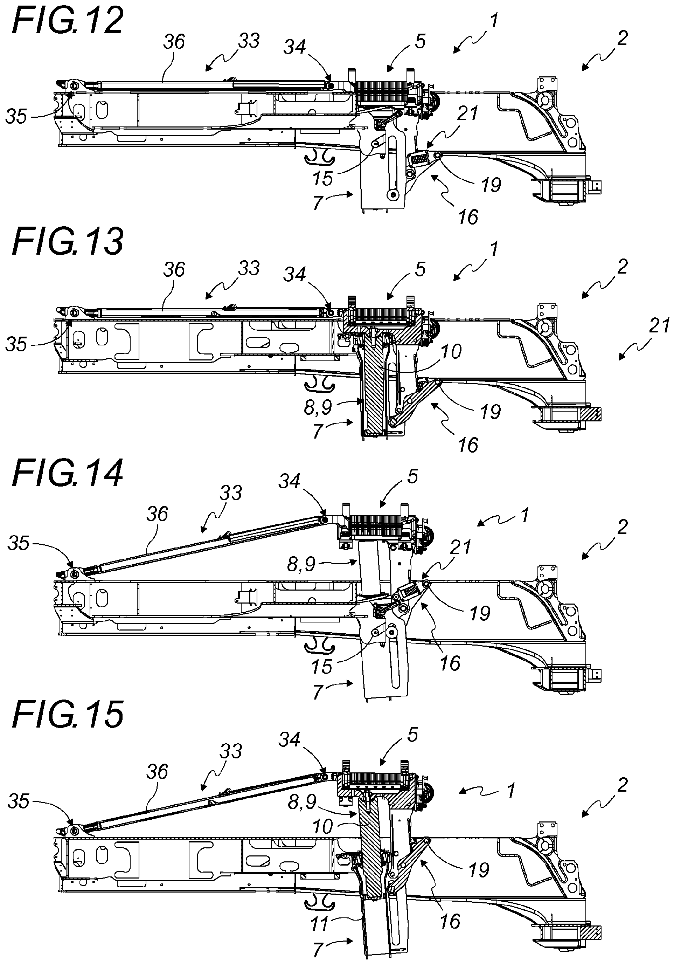

En situation normale, le bras d'équilibrage (16) et notamment le dispositif de rappel élastique (21) sont prévus de sorte de maintenir la nacelle réceptrice (5) dans un plan horizontal (voir figures 12 à 16).

Bien que le bras d'équilibrage (16) soit fixé à la nacelle réceptrice (5), celui-ci est néanmoins débrayable grâce aux ressorts précontraints (21a), de sorte de permettre la libre orientation de la nacelle réceptrice (5) lorsque celle-ci est en position haute de réception d'une pièce de capotage (6), notamment dans le cas où la nacelle réceptrice (5) et la plaque de pivot (14) ne sont pas parallèles.

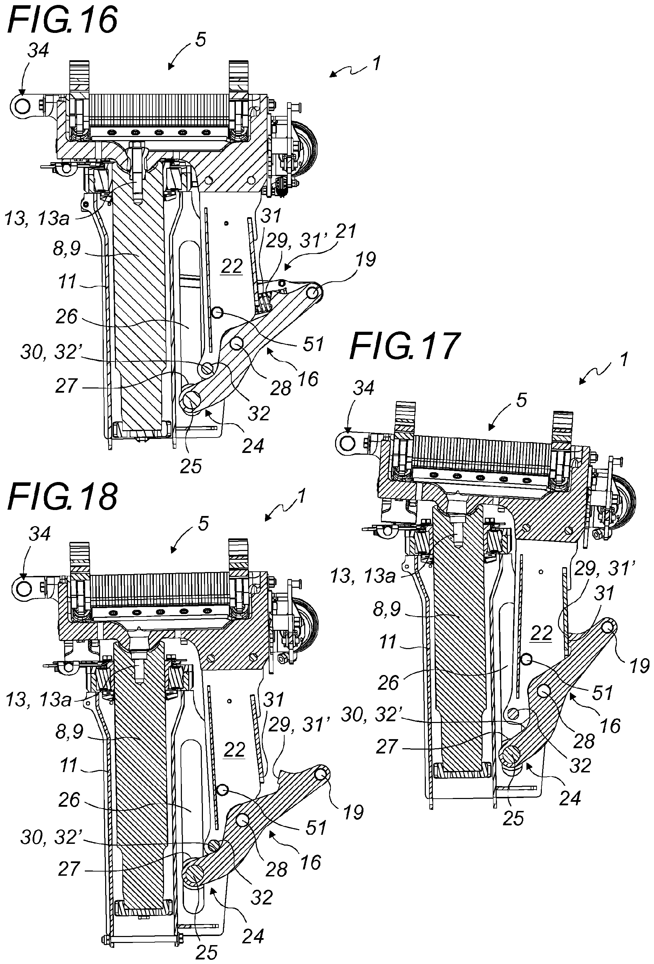

En effet, lorsque l'effort subit par chaque ressort précontraint (21a) dépasse son seul de précontrainte, celui-ci travaille en compression et le bras d'équilibrage (16) peut pivoter autour du pivot d'assemblage (28) médian et permettre ainsi une libre orientation de la nacelle réceptrice (5), en dehors d'un plan horizontal (voir figures 17 et 18). Pour des raisons de sécurité, ce pivotement est néanmoins limité en amplitude dans ses deux positions extrêmes de débrayage au moyen d'une première butée (29) dans un sens de pivotement, et au moyen d'une seconde butée (30) dans l'autre sens de pivotement.

La première butée (29) est préférentiellement sous la forme d'une surface de butée (31') prévue sur en partie supérieure du bras d'équilibrage (16), , au-dessus du pivot d'assemblage (28) médian et du côté du bras d'équilibrage (16) qui est orienté vers le système d'élévation (7) (c'est-à-dire du côté gauche sur les figures) . Dans la première position extrême de débrayage du bras d'équilibrage (16), correspondant à une nacelle réceptrice (5) basculée du côté situé vers le centre de l'unité ferroviaire (4) (c'est-à-dire du côté droit sur la figure 17), la surface de butée (31') vient en appui contre une surface de butée (31) située en regard et prévue à cet effet sur le montant vertical (22) qui prolonge la nacelle réceptrice (5) vers le bas.

La seconde butée (30) est préférentiellement sous la forme d'une surface de butée (32') prévue pour venir en butée contre une tige de butée (32) prévue de manière transversale en partie basse du montant vertical (22) qui prolonge la nacelle vers le bas, par exemple au niveau de l'extrémité libre des deux joues (49, 49') évoquées précédemment. Dans la seconde position extrême de débrayage du bras d'équilibrage (16), correspondant à une nacelle réceptrice (5) basculée du côté situé vers l'extrémité proche de l'unité ferroviaire (4) (c'est-à-dire du côté gauche sur la figure 18), la surface de butée (32') du bras d'équilibrage (16) située du côté de l'extrémité de l'unité ferroviaire (4) vient en appui contre ladite tige de butée (32).

Ces butées (29, 30) pourraient également être assurées par les ressorts précontraints (21a) eux-mêmes.

Dans sa partie supérieure, la nacelle réceptrice (5) est reliée à l'unité ferroviaire par une structure rigide de liaison (33) répondant aux normes de solidité ferroviaire et se prolongeant longitudinalement dans le sens dans lequel se déplace l'unité ferroviaire (4) de sorte de réceptionner et de supporter les chocs longitudinaux subits par la nacelle réceptrice (5).

Disposée longitudinalement par rapport à l'unité ferroviaire (4), la structure rigide de liaison (33) reprend les efforts horizontaux exercés sur la structure réceptrice (5) par le pivot d'attelage (2) de la semi-remorque (3) portée par l'unité ferroviaire (4) lorsque le pivot d'attelage (2) est reçu dans la nacelle réceptrice (5).

Au niveau d'une première extrémité, la structure rigide de liaison (33) est reliée de manière articulée à la partie supérieure de la nacelle réceptrice (5) par une première articulation (34), tandis qu'elle est reliée de manière articulée à l'unité ferroviaire (4) au niveau de sa seconde extrémité, par une seconde articulation (35).

La structure rigide de liaison (33) peut comprendre des bras rigides (36), de préférence longitudinaux, reliés par des traverses (37). Ces bras rigides (36) sont préférentiellement au nombre de deux, mais peuvent être prévus en nombre supérieur.

Selon un mode de réalisation représenté sur les dessins, au niveau de sa seconde articulation (35), la structure rigide de liaison (33) peut par exemple être reliée de manière articulée à l'unité ferroviaire (4) par l'intermédiaire d'un axe de liaison (38). Cet axe de liaison (38) est par exemple monté sur l'unité ferroviaire (4), reçu à pivotement dans un oblong (39) prévu dans la structure rigide de liaison (33) et susceptible de se déplacer dans cet oblong (39). Une goupille (40) empêche par exemple le déplacement de l'axe de liaison (38) dans l'oblong (39), mais pas le pivotement de la structure rigide de liaison (33) par rapport à l'unité ferroviaire (4).

Dans le cas où la structure rigide de liaison (33) comprend des bras rigides (36) longitudinaux, chacun de ces bras rigides (36) peut alors être reliée de manière articulée à l'unité ferroviaire (4) par l'intermédiaire d'un axe de liaison (38) commun ou par un axe de liaison (38) distinct.

Selon une variante de l'invention, la structure rigide de liaison (33) peut être reliée de manière articulée à l'unité ferroviaire (4) par l'intermédiaire d'un axe (38) monté pivotant.

Selon une variante de l'invention, la structure rigide de liaison (33) peut également comprendre un dispositif amortisseur (non représenté) prévu pour amortir les chocs longitudinaux reçus par celle-ci. Un tel dispositif amortisseur peut par exemple comporter un élément élastique d'amortissement par déformation réversible, ainsi qu'un élément dissipateur d'énergie, tel qu'une structure d'amortissement par déformation irréversible, par frottement ou par rupture. Le dispositif amortisseur peut par exemple comporter un cylindre hydraulique.

Selon une autre variante de l'invention, le système de verrouillage (1) peut comporter un dispositif de détection de choc (41) permettant de détecter si l'unité ferroviaire (4) portant une semi-remorque (3) a subi un choc susceptible de détériorer le pivot d'attelage (2).

Cette détection de choc peut par exemple être réalisée par un déplacement anormal de la structure rigide de liaison (33) qui provoque alors des modifications du système de verrouillage (1) de l'invention qui peuvent être facilement détectées.

Selon un mode réalisation avantageux de cette variante, la détection de choc se fait par exemple par le sectionnement total ou partiel d'une conduite de dérivation (42) reliée à la conduite générale (43) pneumatique qui alimente et commande notamment les freins de l'unité ferroviaire (4). En effet, une telle conduite générale (43) équipe habituellement tous les wagons ferroviaires.

Ce sectionnement d'une conduite de dérivation (42) provoque alors une fuite dans la conduite générale (43), ce qui provoque l'activation des freins de l'unité ferroviaire (4). En effet, ces freins sont habituellement à sécurité positive, et toute baisse de pression dans la conduite générale (43) provoque l'activation du freinage, dont l'intensité est proportionnelle à la valeur de la baisse de pression dans la conduite générale (43).

Une telle activation des freins de l'unité ferroviaire (4) alerte alors immédiatement les utilisateurs tout en empêchant la circulation de l'unité ferroviaire (4) transportant une semi-remorque (3) dont le pivot d'attelage (2) est potentiellement détérioré.

La partie (44) de la conduite de dérivation (42) qui est prévue pour être sectionnée est facilement visible de l'extérieur, ce qui permet aux utilisateurs d'identifier facilement l'unité ferroviaire (4) dont la conduite de dérivation (42) a été sectionnée. Afin de stopper la fuite au niveau de la conduite générale (43), le dispositif de détection de choc (41) de l'invention comprend un robinet d'isolement (45) permettant d'isoler la ou les conduites de dérivation (42) qui ont été sectionnées.

Selon ce mode réalisation, la goupille (40) qui empêche le déplacement de chaque axe de liaison (38) dans l'oblong (36) qui lui est associé est de préférence sous la forme d'une goupille (40) de cisaillement. En cas de choc longitudinal dépassant un certain seuil, choc qui se traduit par un effort entre la structure rigide de liaison (33) et l'unité ferroviaire (4) et qui est subit par les goupilles (40), chaque goupille (40) de cisaillement est prévue pour se rompre, et permettre ainsi le déplacement de chaque axe de liaison (35) dans l'oblong (36) qui lui est associé.

Le dispositif de détection de choc (41) comprend alors également une conduite de dérivation (42) montée en dérivation sur la conduite générale (43), habituellement pneumatique, qui alimente et commande notamment les freins de l'unité ferroviaire (4).

Selon ce mode réalisation, le dispositif de détection de choc (41) comprend aussi un outil de sectionnement (46) qui sectionne la conduite de dérivation (42) lorsque la goupille (40) de cisaillement est rompue et qu'un axe de liaison (35) se déplace dans l'oblong. Ainsi, lorsque la structure rigide de liaison (33) se déplace après rupture d'au moins une goupille (40) de cisaillement, l'outil de sectionnement (46) sectionne la conduite de dérivation (42).

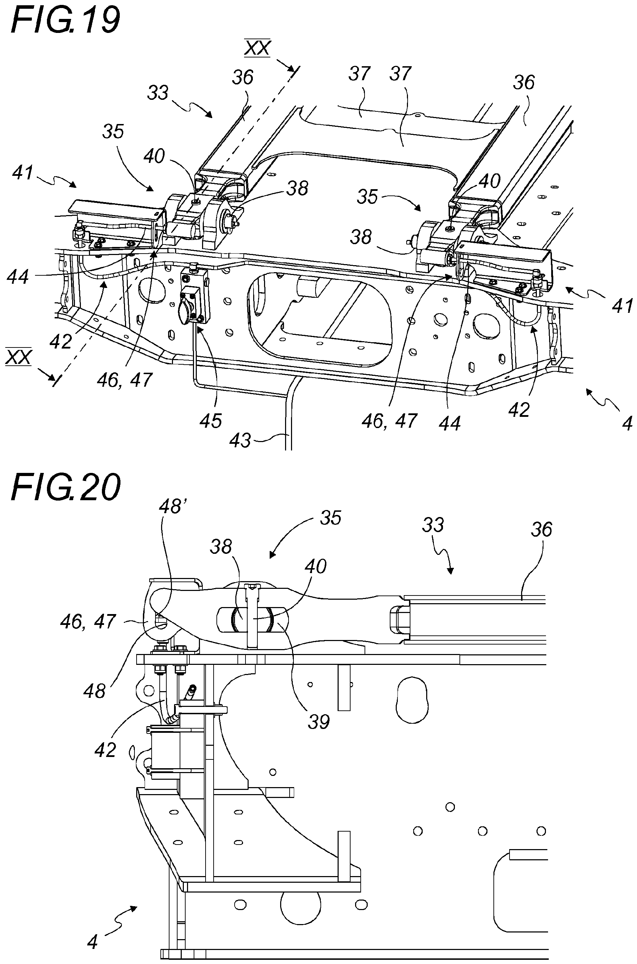

Selon un mode de réalisation représenté sur les figures 19 et 20, l'outil de sectionnement (46) est fixé à l'unité ferroviaire (4), tandis que la conduite de dérivation (42) est fixée à la structure rigide de liaison (33). Il est bien entendu possible de prévoir une configuration inverse.

L'outil de sectionnement (46) se présente préférentiellement sous la forme d'une guillotine (47) comportant deux lames (48, 48') prévues chacune à l'avant et à l'arrière de la partie (44) à sectionner de la conduite de dérivation (42) pour la trancher lorsque l'outil de sectionnement (46), solidaire de la structure rigide de liaison (33), se déplace longitudinalement.

Selon le mode réalisation préféré où la structure rigide de liaison (33) est sous la forme de deux bras rigides (36), une goupille (40) de cisaillement est prévue à l'extrémité de chaque bras rigide (29), et une conduite de dérivation (42) et un outil de sectionnement (46) associé sont prévus au niveau de chacune de ces extrémités de bras rigide (29).

En cas de tamponnement de l'unité ferroviaire (4) comportant le dispositif de détection de choc (41) de l'invention, la structure rigide de liaison (33) subit un effort longitudinal qui est transmis à la fois au pivot d'attelage (2), mais également à la goupille (40) de cisaillement. Si la violence du choc est susceptible de détériorer le pivot d'attelage (2), la goupille (40) de cisaillement est rompue.

Dans le cas où le dispositif de détection de choc (41) de l'invention comprend plusieurs goupilles (40) de cisaillement, conduites de dérivation (42) et outils de sectionnement (46), au moins une des goupilles (40) de cisaillement est alors rompue et l'outil de sectionnement (46) ainsi déplacé sectionne alors la conduite de dérivation (42) concernée.

Lorsque l'unité ferroviaire (4) dont la conduite de dérivation (42) a été sectionnée a été identifiée, les utilisateurs sont alors informés que le pivot d'attelage (2) de la semi-remorque (3) portée par cette unité ferroviaire (4) est potentiellement détérioré. Il leur suffit alors de contrôler l'intégrité de celui-ci, par exemple sur place en sortant le pivot d'attelage (2) hors de la nacelle réceptrice (5), ou ailleurs, en déplaçant la semi-remorque (3) et/ou l'unité ferroviaire (4) afin de pouvoir contrôler le pivot d'attelage (2) plus tard, sans retarder le transport des autres unités ferroviaires attelées à l'unité ferroviaire (4) concernée.

Lorsqu'une goupille (40) de cisaillement a été rompue, le système de verrouillage (1) du pivot d'attelage (2) d'une semi-remorque (3) sur une unité ferroviaire (4) reste entièrement fonctionnel. Chaque axe de liaison (35) de la structure rigide de liaison (33) est toujours maintenu dans un oblong (36), avec un léger jeu longitudinal correspondant aux courses limitées prévu de chaque côté dans chaque oblong (36) qui ne gêne pas son fonctionnement. Le déplacement longitudinal de chaque axe de liaison (35) dans l'oblong (36) qui lui est associé, en cas de rupture de la goupille (40) de cisaillement, reste limité en butée par cette course limitée.

La course limitée est prévue en avant et en arrière de chaque axe de liaison (35) de sorte que le dispositif de détection de choc (41) de l'invention fonctionne de manière équivalente en cas de choc avant ou arrière. C'est également pour cette raison que l'outil de sectionnement (46) présente deux lames (48, 48') prévues chacune à l'avant et à l'arrière de la partie (44) de la conduite de dérivation (42) prévue pour être sectionnée en cas de choc important.

Afin de pouvoir réutiliser le dispositif de détection de choc (41) de l'invention, il suffit de remplacer la ou les goupilles (40) de cisaillement qui ont été brisées, ainsi que la partie (44) de la ou des conduites de dérivation (42) qui ont été sectionnées.

Le fonctionnement du système de verrouillage (1) de l'invention, et notamment celui du bras d'équilibrage (16) et de la structure rigide de liaison (33), vont maintenant être décrits pour les différentes phases de déplacement de la nacelle réceptrice (5), lorsque la pièce de capotage (6) est décalée dans l'une ou l'autre direction par rapport au centre de la nacelle réceptrice (5) où il est idéalement prévue de la recevoir.

### Phase de montée de la nacelle réceptrice

Pendant la phase de montée de la nacelle réceptrice (5), le système d'élévation (7) est actionné de manière à pousser la nacelle réceptrice (5) vers le haut. Celle-ci est montée sur le système d'élévation (7) par l'intermédiaire d'une articulation (13), par exemple une rotule (13'), mais est maintenue dans un plan horizontal et sa rotation est empêchée, à la fois par la structure rigide de liaison (33) et par le bras d'équilibrage (16) dont les ressorts précontraints apportent une certaine raideur dans ce maintien.

Pendant cette phase, la vis de levage (10) coulisse vers la haut par rapport à son fourreau (11) qui reste fixe, que la nacelle réceptrice (5) est déplacée vers le haut, et le bras d'équilibrage (16) monte également, guidé par la coulissement vertical de sa tige transversale (25) dans les glissières (26).

Lorsque la nacelle réceptrice (5) entre en contact avec la pièce de capotage (6) montée sur le pivot d'attelage (2) de la semi-remorque, cette pièce de capotage (6) est reçue dans la nacelle réceptrice (5).

Selon que le pivot d'attelage (2) soit bien centré ou non par rapport à l'axe de l'articulation (13) sur laquelle est montée la nacelle réceptrice (5), le système de verrouillage (1) de l'invention réagit de manière différente.

### Pivot d'attelage centré par rapport à la nacelle réceptrice

Dans ce cas, la nacelle réceptrice (5) est déplacée vers le haut tout en restant dans un plan horizontal, jusqu'à verrouillage de la pièce de capotage (6) par les éléments basculants (12) de la nacelle réceptrice (5).

Les ressorts précontraints (21a) du bras d'équilibrage (16) ne sont pas sollicités et le bras d'équilibrage (16) reste dans sa position normale (voir figure 16).

### Pivot d'attelage décentré longitudinalement par rapport à la nacelle réceptrice

Dans ce cas, lorsque la nacelle réceptrice (5) est déplacée vers le haut contre le pivot d'attelage (2), elle bascule selon un plan vertical longitudinal (voire figures 17 et 18). Cela engendre un couple important sur le bras d'équilibrage (16). Lorsque ce couple dépasse le seuil de précontrainte des ressorts précontraints (21a), ces derniers sont contraints encore plus et le bras d'équilibrage (16) pivote. La nacelle réceptrice (5) peut alors s'orienter librement, selon une amplitude limitée par les butées (29, 30) du bras d'équilibrage (16), et venir se caler contre la plaque de pivot (14) ou le tablier de la semi-remorque (3) tandis que la pièce de capotage (6) est verrouillée par les éléments basculants (12).

### Pivot d'attelage décentré latéralement par rapport à la nacelle réceptrice

Dans ce cas, lorsque la nacelle réceptrice (5) est déplacée vers le haut contre le pivot d'attelage (2), elle bascule selon un plan vertical perpendiculaire à l'axe longitudinal de l'unité ferroviaire (4).

Cela engendre un couple important sur le bras d'équilibrage (16) et sur la structure rigide de liaison (33). Ce couple est repris d'une part par le bras d'équilibrage (16) dont les butées transversales (27) viennent alors buter contre les glissières (26) du fourreau (11) de manière à limiter le pivotement latéral de la nacelle réceptrice (5) qui peut s'orienter librement, selon une amplitude limitée par le jeu existant entre les butées transversales (27) et le fourreau (11), et venir se caler contre la plaque de pivot (14) ou le tablier de la semi-remorque (3) tandis que la pièce de capotage (6) est verrouillée par les éléments basculants (12) et d'autre part par la rigidité en torsion de la structure rigide (33).

Dans le cas où le pivot d'attelage (2) serait décentré à la fois longitudinalement et latéralement par rapport à la nacelle réceptrice (5), les mouvements décrits précédemment sont combinés.

Une fois que la pièce de capotage (6) est verrouillée par les éléments basculants (12), la nacelle réceptrice (5) est plaquée contre la plaque de pivot (14) ou le tablier de la semi-remorque (3) et le bras d'équilibrage (16) retourne en position normale dans laquelle aucune des butées (29, 30) n'est plus en contact contre la surface de butée (31', 32') qui lui est associée. Ainsi, le bras d'équilibrage (16) n'est sollicité, et ces butées (29, 30) ne sont utilisées que lors de la phase de chargement d'une semi-remorque (3) sur une unité ferroviaire (4) équipé d'un système de verrouillage (1) de l'invention, et non pas lors de la phase de transport d'une semi-remorque (3).

Il est évident que la présente description ne se limite pas aux exemples explicitement décrits, mais comprend également d'autres modes de réalisation et/ou de mise en œuvre. Ainsi, une caractéristique technique décrite peut être remplacée par une caractéristique technique équivalente sans sortir du cadre de la présente invention, tel que défini par les revendications.

## Revendications

1. Structure support (4) comportant un système d'immobilisation pour immobiliser une semi-remorque (3) pour son transport dans ou sur ladite structure support (4), ledit système d'immobilisation comprenant un système de verrouillage (1) du pivot d'attelage (2) de la semi-remorque (3) sur ladite structure support (4), lequel système de verrouillage (1) comprend :
• une nacelle réceptrice (5) montée mobile verticalement sur la structure support (4) et prévue pour recevoir une pièce de capotage (6) montée par une ouverture centrale sur le pivot d'attelage (2) d'une semi-remorque (3),
• un système d'élévation (7) comprenant un dispositif de levage (8) disposé sensiblement verticalement sous la nacelle réceptrice (5) et fixé à celle-ci pour la déplacer verticalement entre une position basse et au moins une position haute
• une structure rigide de liaison (33) sensiblement horizontale s'étendant longitudinalement et reprenant les efforts longitudinaux subits par la nacelle réceptrice (5), cette structure rigide de liaison (33) étant reliée de manière articulée à la nacelle réceptrice (5) par sa première extrémité et de manière articulée à la structure support (4) par sa seconde extrémité,
**caractérisée en ce que** :
• le système d'élévation (7) est monté pivotant sur la structure support (4) au niveau d'un axe de pivotement (15) transversal,
• le dispositif de levage (8) est fixé à la nacelle réceptrice (5) par l'intermédiaire d'une articulation (13) autorisant au moins un mouvement de bascule longitudinale de la nacelle réceptrice (5),
et **en ce que** le système de verrouillage (1) comprend en outre les moyens suivants :
• des butées mécaniques (29, 30) qui limitent le mouvement de bascule longitudinale de la nacelle réceptrice (5) vers l'avant et vers l'arrière ;
• un dispositif de rappel élastique (21) qui ramène la nacelle réceptrice (5) en position non basculée.

2. Structure support (4) selon la revendication 1, **caractérisée en ce que** l'articulation (13) comprend une rotule (13a) qui autorise une libre orientation de la nacelle réceptrice (5).

3. Structure support (4) selon l'une quelconque des revendications précédentes, **caractérisée en ce que** le dispositif de rappel élastique (21) comprend au moins un ressort précontraint (21a) qui maintient la nacelle réceptrice (5) en position non basculée tant que l'effort subit par le ressort précontraint (21a) n'excède pas son seuil de précontrainte, et qui autorise le basculement de la nacelle réceptrice (5) lorsque le seuil de précontrainte est dépassé.

4. Structure support (4) selon l'une quelconque des revendications précédentes, **caractérisée en ce que** le dispositif de levage (8) est un vérin à vis (9), un vérin pneumatique, un vérin hydraulique ou un vérin électrique.

5. Structure support (4) selon l'une quelconque des revendications précédentes, **caractérisée en ce que** la structure rigide de liaison (33) comprend des bras rigides (36) longitudinaux reliés entre eux par des traverses (37).

6. Structure support (4) selon l'une quelconque des revendications précédentes, **caractérisée en ce que** :
- le système de verrouillage (1) comprend :
• un montant vertical (22) solidaire de la nacelle réceptrice (5) et prolongeant celle-ci vers le bas ;
• un bras d'équilibrage (16) relié de manière articulée au montant vertical (22) par un pivot d'assemblage (28) et relié au système d'élévation (7) de manière coulissante verticalement par rapport audit système d'élévation (7) ; **en ce que**
- les butées mécaniques (29, 30) sont situées sur le bras d'équilibrage (16), et le mouvement de bascule longitudinale de la nacelle réceptrice (5) vers l'avant et vers l'arrière est limité par le contact du montant vertical (22) contre ces butées mécaniques (29, 30) ; et **en ce que**
- le dispositif de rappel élastique (21) est relié au bras d'équilibrage (16) et au montant vertical (22).

7. Structure support (4) selon la revendication précédente, **caractérisée en ce que** le pivot d'assemblage (28) est situé dans la zone médiane du bras d'équilibrage (16), **en ce qu'**une première extrémité (24) du bras d'équilibrage (16) est reliée au système d'élévation (7), et **en ce que** la seconde extrémité du bras d'équilibrage (16) est reliée au dispositif de rappel élastique (21) par un pivot d'articulation (19).

8. Structure support (4) selon la revendication 6 ou 7, **caractérisée en ce que** le dispositif de rappel élastique (21) est monté sur le montant vertical (22) par une articulation (50).

9. Structure support (4) selon la revendication 7, **caractérisée en ce que** le dispositif de rappel élastique (21) comprend deux logements (20, 20') renfermant chacun un ressort précontraint (21a), une première extrémité (23) de chaque logement (20, 20') étant montée articulée sur une tige (51) qui traverse le montant vertical (22), et la deuxième extrémité de chaque logement (20, 20') étant montée articulée sur le pivot d'articulation (19) qui traverse la seconde extrémité du bras d'équilibrage (16).

10. Structure support (4) selon l'une quelconque des revendications 6 à 9, **caractérisée en ce que** le montant vertical (22) se termine en partie inférieure par deux joues (49, 49') parallèles entre lesquelles le bras d'équilibrage (16) est reçu, et **en ce que** le pivot d'assemblage (28) est une tige qui traverse le bras d'équilibrage (16) et ces deux joues (49, 49').

11. Structure support (4) selon la revendication 6, **caractérisée en ce que** le système d'élévation (7) présente deux glissières (26) verticales dans lesquelles coulisse de façon guidée une tige transversale (25) solidaire du bras d'équilibrage (16), la tige transversale (25) étant retenue dans chaque glissière (26) au niveau de ses extrémités par des butées transversales (27).

12. Structure support (4) selon l'une quelconque des revendications précédentes, **caractérisée en ce qu'**il comprend un dispositif de détection de choc (41) prévu pour détecter si la structure support (4) portant une semi-remorque (3) subit un choc susceptible de détériorer le pivot d'attelage (2).

13. Structure support (4) selon la revendication précédente, **caractérisée en ce que** la structure rigide de liaison (33) est reliée à la structure support (4) par une articulation (35), et **en ce que** le dispositif de détection de choc (41) comprend au moins une goupille (40) de cisaillement prévue dans cette articulation (35) et qui se rompt lorsque la structure rigide de liaison (33) subit un effort longitudinal qui excède un seuil donné, cette rupture de la goupille (40) de cisaillement autorisant un déplacement longitudinal anormal de la structure rigide de liaison (33).

14. Structure support (4) selon la revendication précédente, **caractérisée en ce qu'**elle est équipée d'une conduite de dérivation (42) reliée à une conduite générale (43) pneumatique qui alimente et commande les freins de la structure support (4), et **en ce que** le dispositif de détection de choc (41) comprend en outre un outil de sectionnement (46) qui, en cas de déplacement longitudinal anormal de la structure rigide de liaison (33), sectionne totalement ou partiellement ladite conduite de dérivation (42).

15. Structure support (4) selon l'une quelconque des revendications 1 à 14, **caractérisé en ce que** le système d'élévation (7) comprend un actionneur commandé pour déplacer et positionner la nacelle (5) à une hauteur compatible avec la hauteur de la semi-remorque (3).

16. Structure support (4) selon l'une quelconque des revendications 1 à 15, **caractérisé en ce que** la structure support (4) est une unité ferroviaire (4).

17. Unité ferroviaire **caractérisée en ce qu'**elle comporte au moins une structure support (4) conforme à l'une quelconque des revendications 1 à 15.

## Patentansprüche

1. Stützstruktur (4) mit einer Wegrollsperre zur Immobilisierung eines Aufliegers (3) zum Transport in oder auf dieser Stützstruktur (4), diese Wegrollsperre enthält ein Verriegelungssystem (1) des Sattelzapfens (2) des Aufliegers (3) auf dieser Stützstruktur (4), das Verriegelungssystem (1) umfasst:
• einen Aufnahmekorb (5), vertikal beweglich auf der Stützstruktur (4) montiert und vorgesehen zur Aufnahme eines Verkleidungsteils (6), montiert durch eine zentrale Öffnung am Sattelzapfen (2) eines Aufliegers (3),
• ein Hubsystem (7) mit einer Hebevorrichtung (8), angeordnet im Wesentlichen vertikal unter dem Aufnahmekorb (5) und an diesem befestigt, um ihn vertikal zwischen einer unteren Position und mindestens einer oberen Position zu bewegen;
• eine starre Verbindungsstruktur (33) im Wesentlichen horizontal, die in Längsrichtung verläuft und die Kräfte in Längsrichtung aufnimmt, die auf den Aufnahmekorb (5) wirken, diese starre Verbindungsstruktur (33) ist über Gelenk mit dem Aufnahmekorb (5) verbunden, über ein erstes Endstück und über ein Gelenk über sein zweites Endstück mit der Stützstruktur (4);
**dadurch gekennzeichnet, dass**
• das Hubsystem (7) schwenkbar an der Stützstruktur (4) befestigt ist, in Höhe einer Schwenkachse (15) in Querrichtung,
• die Hebevorrichtung (8) am Aufnahmekorb (5) über ein Gelenk (13) befestigt ist, das mindestens eine Kippbewegung in Längsrichtung des Aufnahmekorbs (5) erlaubt,
und dadurch dass das Verriegelungssystem (1) außerdem die folgenden Mittel umfasst:
• mechanische Anschläge (29, 30), die die Kippbewegung in Längsrichtung des Aufnahmekorbs (5) nach vorne und hinten begrenzen,
• eine elastische Rückstellvorrichtung (21) die den Aufnahmekorb (5) in die nicht gekippte Position zurückstellt

2. Stützstruktur (4) nach Anspruch 1, **dadurch gekennzeichnet, dass** das Gelenk (13) einen Kugelkopf (13a) umfasst, der eine freie Ausrichtung des Aufnahmekorbs ermöglicht.(5).

3. Stützstruktur (4) nach irgendeinem der vorangehenden Ansprüche, **dadurch gekennzeichnet, dass** die elastische Rückstellvorrichtung (21) mindestens eine vorgespannte Feder (21a) enthält, die den Aufnahmekorb (5) in der nicht gekippten Position hält, solange die Kraft, die auf die vorgespannte Feder (21a) wirkt, den Vorspannungsgrenzwert nicht übersteigt und die das Kippen des Aufnahmekorbs (5) erlaubt, sobald der Vorspannungsgrenzwert überschritten wird.

4. Stützstruktur (4) nach irgendeinem der vorangehenden Ansprüche, **dadurch gekennzeichnet, dass** es sich bei der Hebevorrichtung (8) um ein Spindelhubgetriebe (9), einen Pneumatikzylinder, einen Hydraulikzylinder oder einen elektrischen Zylinder handeln kann.

5. Stützstruktur (4) nach irgendeinem der vorangehenden Ansprüche, **dadurch gekennzeichnet, dass** die starre Verbindungsstruktur (33) starre Arme (36) in Längsrichtung enthält, die miteinander durch Querstreben (37) verbunden sind.

6. Stützstruktur (4) nach irgendeinem der vorangehenden Ansprüche, **dadurch gekennzeichnet, dass**:
- das Verriegelungssystem (1) umfasst:
• einen vertikalen Pfosten (22), fest verbunden mit dem Aufnahmekorb (5), der diesen nach unten verlängert;
• einen Ausgleichsarm (16), der über Gelenk mit dem vertikalen Pfosten (22) über einen Verbindungszapfen (28) verbunden ist und mit dem Hubsystem (7) vertikal, bezogen auf dieses Hubsystem (7) gleitend verbunden ist; dadurch dass
- sich die mechanischen Anschläge (29, 30) auf dem Ausgleichsarm (16) befinden und die Kippbewegung in Längsrichtung des Aufnahmekorbs (5) nach vorne und hinten durch den Kontakt des vertikalen Pfostens (22) gegen diese mechanischen Anschläge (29, 30) begrenzt ist; und dadurch, dass
- die elastische Rückstellvorrichtung (21) mit dem Ausgleichsarm (16) und dem vertikalen Pfosten (22) verbunden ist.

7. Stützstruktur (4) nach dem vorangehenden Anspruch, **dadurch gekennzeichnet, dass** der Verbindungszapfen (28) sich im mittleren Bereich des Ausgleichsarms (16) befindet, dadurch dass ein erstes Endstück (24) des Ausgleichsarms (16) mit dem Hubsystem (7) verbunden ist und dadurch, dass das zweite Ausgleichsarm (16) mit der elastischen Rückstellvorrichtung (21) über einen Gelenkzapfen (19) verbunden ist.

8. Stützstruktur (4) nach Anspruch 6 oder 7, **dadurch gekennzeichnet, dass** die elastische Rückstellvorrichtung (21) auf dem vertikalen Pfosten (22) über ein Gelenk (50) montiert ist.

9. Stützstruktur (4) nach Anspruch 7, **dadurch gekennzeichnet, dass** die elastische Rückstellvorrichtung (21) zwei Aufnahmen (20, 20') umfasst, die jeweils eine vorgespannte Feder (21a) enthalten, ein erstes Endstück (23) jeder Aufnahme (20, 20') ist über Gelenk an einer Stange (51) montiert, die durch den vertikalen Pfosten (22) hindurchführt, und das zweite Endstück jeder Aufnahme (20, 20') ist dabei über Gelenk am Gelenkzapfen (19) montiert, der durch das zweite Endstück des Ausgleichsarms (16) hindurchführt.

10. Stützstruktur (4) nach einem beliebigen der Ansprüche 6 bis 9, **dadurch gekennzeichnet, dass** der vertikale Pfosten (22) sich im unteren Teil in zwei parallelen Backen (49, 49') endet, zwischen denen der Ausgleichsarm (16) aufgenommen wird und dass der Verbindungszapfen (28) eine Stange ist, die durch den Ausgleichsarm (16) und diese beiden Backen (49, 49') hindurchführt.

11. Stützstruktur (4) nach Anspruch 6, **dadurch gekennzeichnet, dass** das Hubsystem (7) zwei vertikale Gleitschienen (26) aufweist, in denen eine Querstange (25) geführt gleitet, die mit dem Ausgleichsarm (16) fest verbunden ist, die Querstange (25) wird dabei in jeder Gleitschiene (26) in Höhe ihrer Endstücke durch Queranschläge (27) gehalten.

12. Stützstruktur (4) nach irgendeinem der vorangehenden Ansprüche, **dadurch gekennzeichnet, dass** sie einen Aufpralldetektor (41) enthält, zur Erkennung, ob auf die Stützstruktur (4), die einen Auflieger (3) trägt, eine Erschütterung wirkt, die den Sattelzapfen (2) beschädigen könnte.

13. Stützstruktur (4) nach dem vorangehenden Anspruch, **dadurch gekennzeichnet, dass** die starre Verbindungsstruktur (33) mit der Stützstruktur (4) über ein Gelenk (35) verbunden ist und dadurch, dass der Aufpralldetektor (41) mindestens einen in diesem Gelenk (35) vorgesehenen Scherbolzen (40) enthält, der bricht, wenn die starre Verbindungsstruktur (33) eine Belastung in Längsrichtung erfährt, die einen gegebenen Grenzwert übersteigt, dieser Bruch des Scherbolzens (40) erlaubt eine anormale Längsverschiebung der starren Verbindungsstruktur (33).

14. Stützstruktur (4) nach dem vorangehenden Anspruch, **dadurch gekennzeichnet, dass** sie mit einer Umgehungsleitung (42) ausgerüstet ist, verbunden mit einer allgemeinen Pneumatikleitung (43), die die Bremsen der Stützstruktur (4) versorgt und steuert, und dadurch, dass der Aufpralldetektor (41) außerdem ein Trennwerkzeug (46) enthält, das im Falle einer anormalen Längsverschiebung der starren Verbindungsstruktur (33), diese Umgehungsleitung (42) ganz oder teilweise abtrennt.

15. Stützstruktur (4) nach einem beliebigen der Ansprüche 1 bis 14, **dadurch gekennzeichnet, dass** das Hubsystem (7) einen Schalter enthält, gesteuert zum Verschieben und Positionieren des Aufnahmekorbs (5) in einer mit der Höhe des Aufliegers (3) zu vereinbarenden Höhe.

16. Stützstruktur (4) nach einem beliebigen der Ansprüche 1 bis 15, **dadurch gekennzeichnet, dass** es sich bei der Stützstruktur (4) um eine Bahneinheit handelt.

17. Bahneinheit, **dadurch gekennzeichnet, dass** sie mindestens eine Stützstruktur (4) entsprechend irgendeinem der Ansprüche 1 bis 15 enthält.

## Claims

1. A support structure (4) comprising an immobilization system for immobilizing a semi-trailer (3) for the transport thereof on or in said support structure (4), said immobilization system comprising a locking system (1) of the kingpin (2) of the semi-trailer (3) on said support structure (4), which locking system (1) comprises:
• a receiving nacelle (5) mounted vertically movable on the support structure (4) and intended to receive a cowling part (6) mounted by a central opening on the kingpin (2) of a semi-trailer (3),
• a lifting system (7) comprising a lifting device (8) disposed substantially vertically beneath the receiving nacelle (5) and attached thereto in order to move it vertically between a low position and at least one high position,
• a substantially horizontal rigid linking structure (33) extending longitudinally and absorbing the longitudinal forces on the receiving nacelle (5), said rigid linking structure (33) being hingedly connected to the receiving nacelle (5) by the first end thereof and hingedly connected to the support structure (4) by the second end thereof
**characterized in that**:
• the lifting system (7) is mounted pivotally on the support structure (4) at a transverse pivot pin (15),
• the lifting device (8) is attached to the receiving nacelle (5) by means of an articulation (13) allowing at least one longitudinal tilting movement of the receiving nacelle (5),
and **in that** the locking system (1) further comprises the following means:
• mechanical stops (29, 30) that limit the longitudinal forwards and backwards tilting movement of the receiving nacelle (5);
• an elastic return device (21) that returns the receiving nacelle (5) to a non-tilted position.

2. The support structure (4) according to claim 1, **characterized in that** the articulation (13) comprises a ball and socket joint (13a) that allows a free orientation of the receiving nacelle (5).

3. The support structure (4) according to any one of the preceding claims, **characterized in that** the elastic return device (21) comprises at least one preloaded spring (21a) which maintains the receiving nacelle (5) in the non-tilted position as long as the force on the preloaded spring (21a) does not exceed its preloaded threshold, and which allows the tilting of the receiving nacelle (5) when the preloaded threshold is exceeded.

4. The support structure (4) according to any one of the preceding claims, **characterized in that** the lifting device (8) is a jack screw (9), a pneumatic jack, a hydraulic jack or an electric jack.

5. The support structure (4) according to any one of the preceding claims, **characterized in that** the rigid linking structure (33) comprises longitudinal rigid arms (36) connected to each other by cross members (37).

6. The support structure (4) according to any one of the preceding claims, **characterized in that**:
- the locking system (1) comprises:
• a vertical upright (22) integral with the receiving nacelle (5) and extending it downwards;
• a balance arm (16) pivotally connected to the vertical upright (22) by an assembly pin (28) and connected to the lifting system (7) in a vertically slidable manner with respect to said lifting system (7); and **in that**
- the mechanical stops (29, 30) are located on the balance arm (16), and the longitudinal forwards and backwards tilting movement of the receiving nacelle (5) is limited by the contact of the vertical upright (22) against said mechanical stops (29, 30); and **in that**
- the elastic return device (21) is connected to the balance arm (16) and to the vertical upright (22).

7. The support structure (4) according to the preceding claim, **characterized in that** the assembly pin (28) is located in the median zone of the balance arm (16), a first end (24) of the balance arm (16) is connected to the lifting system (7), and the second end of the balance arm (16) is connected to the elastic return device (21) by a pivot pin (19).

8. The support structure (4) according to claim 6 or 7, **characterized in that** the elastic return device (21) is mounted on the vertical upright (22) by an articulation (50).

9. The support structure (4) according to claim 7, **characterized in that** the elastic return device (21) comprises two recesses (20, 20') each enclosing a preloaded spring (21a), a first end (23) of each recess (20, 20') being pivotally mounted on a rod (51) that passes through the vertical upright (22), and the second end of each recess (20, 20') being pivotally mounted on the pivot pin (19) that passes through the second end of the balance arm (16).

10. The support structure (4) according to any one of claims 6 to 9, **characterized in that** the vertical upright (22) on its lower part terminates in two parallel flanges (49, 49') between which the balance arm (16) is pivotally received, and **in that** the assembly pin (28) is a rod which passes through the balance arm (16) and said two flanges (49, 49').

11. The support structure (4) according to claim 6, **characterized in that** the lifting system (7) has two vertical slideways (26) in which a transverse rod (25) integral with the balance arm (16) slides in a guided manner, the transverse rod (25) being retained in each slideway (26) at its ends by transverse stops (27).

12. The support structure (4) according to any one of the preceding claims, **characterized in that** it comprises a shock detection device (41) provided to detect if the support structure (4) carrying a semi-trailer (3) has suffered a shock likely to damage the kingpin (2).

13. The support structure (4) according to the preceding claim, **characterized in that** the rigid linking structure (33) is connected to the support structure (4) by an articulation (35), and **in that** the shock detection device (41) comprises at least one shear pin (40) provided in said articulation (35) and which breaks when the rigid linking structure (33) undergoes longitudinal force that exceeds a given threshold, said breakage of the shear pin (40) allowing an abnormal longitudinal movement of the rigid linking structure (33).

14. The support structure (4) according to the preceding claim, **characterized in that** it is equipped with a bypass pipe (42) connected to a general pneumatic pipe (43) that supplies and controls the brakes of the support structure (4), and **in that** the shock detection device (41) further comprises a cutting tool (46) which, in the event of abnormal longitudinal movement of the rigid linking structure (33), totally or partially cuts the said bypass pipe (42).

15. The support structure (4) according to any one of claims 1 to 14, **characterized in that** the lifting system (7) comprises an actuator controlled to move and position the nacelle (5) at a height compatible with the height of the semi-trailer (3).

16. The support structure (4) according to any one of claims 1 to 15, **characterized in that** the support structure (4) is a railway unit (4).

17. A railway unit (4), **characterized in that** it comprises at least one support structure (4) according to any one of claims 1 to 15.
